# EUROPÄISCHE PATENTSCHRIFT

(11) **EP 0 520 046 B1**
(45) Veröffentlichungstag und Bekanntmachung des Hinweises auf die Patenterteilung: **01.02.1995**
(21) Anmeldenummer: 91920450.3
(22) Anmeldetag: 26.11.1991
(51) Int. Cl.: G01F 23/28, H01P 1/08

(54) **ENTFERNUNGSMESSGERÄT, INSBESONDERE ZUR FÜLLSTANDMESSUNG VON INDUSTRIETANKS**
TELEMETER, IN PARTICULAR FOR MEASURING THE LEVEL IN INDUSTRIAL TANKS
TELEMETRE, NOTAMMENT DE MESURE DE NIVEAU DE CITERNES INDUSTRIELLES

(30) Priorität: 15.01.1991 DE 4100922
(43) Veröffentlichungstag der Anmeldung: 30.12.1992
(73) Patentinhaber: KROHNE MESSTECHNIK GMBH & CO. KG, D-47058 Duisburg (DE)
(72) Erfinder: VAN DER POL, Ronald, NL-5924 AK Venlo (NL)
(74) Vertreter: Ackmann, Günther
(86) Internationale Anmeldenummer: EP9102240
(87) Internationale Veröffentlichungsnummer: WO9213257

(56) Entgegenhaltungen:
- WO-A-90/12292
- US-A- 2 368 566
- US-A- 3 001 160

## Beschreibung

Die Erfindung betrifft ein Entfernungsmeßgerät, insbesondere zur Füllstandmessung von Industrietanks, welches aus einem elektronischen Sende- und Empfangsteil für kurzwellige elektromagnetische Wellen, wie Mikrowellen und einem durch eine Trennwand führenden zylinderförmigen Hohlleiter besteht, in dem ein die beiden Räume trennendes Hohlleiterfenster aus einem für die elektromagnetischen Wellen durchlässigen Werkstoff, wie Quarzglas, angeordnet ist, wobei der Hohlleiter und das Hohlleiterfenster zur axialen Abstützung konisch ausgebildete Abschnitte aufweisen.

Neben den Radargeräten zur Entfernungsmessung sind mit Mikrowellen arbeitende Füllstandmeßgeräte bekannt, die Signale im Mikrowellenbereich aussenden, wobei diese an der Oberfläche des im Behälter befindlichen Mediums reflektiert und vom Empfänger aufgenommen werden. Aus den Signalen wird der Abstand zwischen dem Füllstandmeßgerät und der Oberfläche des Mediums mit Hilfe einer elektronischen Schaltanordnung ermittelt, der auch Mikroprozessoren und elektronische Rechner zur Auswertung zugeordnet sein können. Zur Verwendung solcher Mikrowellen-Füllstandmeßgeräte für Behälter, insbesondere Industrietanks, in denen bei hohen oder niedrigen Betriebstemperaturen Unter- oder Überdrücke herrschen, insbesondere, wenn diese explosible und/oder aggressive und/oder toxische Medien enthalten, ist es notwendig, den Behälterraum von dem elektronischen Sende- und Empfangsteil zu trennen. Hierfür ist es bekannt, in dem durch das Behälterdach des Tanks rangenden Hohlleiter ein zylinderförmiges Hohlleiterfenster aus Quarzglas o. dgl. anzuordnen, das einen für die Durchlässigkeit der Mikrowellen günstigen niedrigen dielektrischen Verlustfaktor besitzt. Das Hohlleiterfenster bildet also eine Trennstufe zur Abtrennung der die elektronischen Bauteile aufweisenden Teile vom Tankinhalt. Bei einer Druckeinwirkung von der Gehäuseseite her oder bei einem Unterdruck auf der Behälterseite, insbesondere bei Einwirkung hoher oder niedriger Temperaturen, besteht die Gefahr, daß das Hohlleiterfenster aus dem Hohlleiter herausgedrückt wird. Um dies zu verhindern, ist aus der US-PS 3,001,160 bekannt, den Hohlleiter und das Hohlleiterfenster für eine axiale Abstützung mit konisch ausgebildeten Abschnitten zu versehen. Die konischen Flächen liegen bündig gegeneinander an. Bei dieser Ausführung wird zwar das Hohlleiterfenster bei einer axialen Einwirkung am Hohlleiterrohr abgestützt. Doch besteht der Nachteil, daß bei großen Temperaturschwankungen erhebliche Spannungskräfte auf das Glas einwirken, so daß dies leicht zu Bruch kommt oder Rissebildungen entstehen. Hierbei wirken sich nicht nur unterschiedliche Temperaturausdehnungskoeffizienten von Glas und Hohlleiterrohr aus, sondern auch unterschiedliche Wärmeableitungen zwischen beiden Bauteilen.

Demgegenüber liegt der Erfindung die Aufgabe zugrunde, ein Entfernungsmeßgerät der gattungsgemäßen Art derart auszubilden, daß das Hohlleiterfenster sowohl bei hohen Druckeinwirkung und -schwankungen, wie auch bei hohen Temperaturen und -schwankungen nicht zerstört wird.

Diese Aufgabe wird erfindungsgemäß dadurch gelöst, daß der konische Abschnitt des Hohlleiterfensters in einer entsprechend konisch ausgebildeten Buchse liegt, die mit einem Spiel in einer zylinderförmigen Bohrung des Hohlleiterfensters lagert und in axialer Richtung gegen eine Stützschulter des Hohlleiterfensters anliegt.

Die erfindungsgemäße Ausführung hat den Vorteil, daß das Hohlleiterfenster bei einer Überdruck- oder Unterdruckeinwirkung sicher im Hohlleiter gehalten wird, wobei eine Zerstörung des aus Quarzglas o.-dgl. bestehenden Hohlleiterfensters nicht zu befürchten ist. Im Falle einer unterschiedlichen Wärmeausdehnung zwischen Hohlleiterfenster und Hohlleiter erlaubt das zwischen beiden Bauteilen befindliche radiale Spiel einen entsprechenden Ausgleich. Bei einer Druckeinwirkung wird der konische Abschnitt des Hohlleiterfensters gegen die entsprechend ausgebildete konische Fläche der relativ dünnwandigen Buchse angedrückt, die sich wiederum an der Stützschulter des Hohlleiters abstützt.

Das erfindungsgemäß ausgebildete Hohlleiterfenster mit zugehöriger Buchse kann auch so ausgebildet sein, daß eine Abstützung in beiden Längsrichtungen erfolgt. Hierfür sind im Hohlleiter zwei Hohlleiterfenster mit je einer Buchse spiegelbildlich angeordnet, wobei der Hohlleiter in zwei lösbar miteinander verbundene Abschnitte derart unterteilt ist, daß im offenen Zustand die Buchsen und die Hohlleiterfenster in die zylinderförmigen Bohrungen der Abschnitte einsteckbar sind. Dies ermöglicht einen einfachen Zusammenbau. Um den Hohlleiter im Bereich der Hohlleiterfenster gegenüber dem Medium abzudichten, ist zwischen dem zylinderförmigen Abschnitt des Hohlleiterfensters und dem Hohlleiter ein Dichtungsring angeordnet, der in einer Ringnut des Hohlleiters liegt. Zweckmäßig besteht die Buchse aus einem relativ dünnwandigen Metall, das dem Temperatursausdehnungskoeffizienten des Hohlleiterfensters entspricht oder nahe kommt.

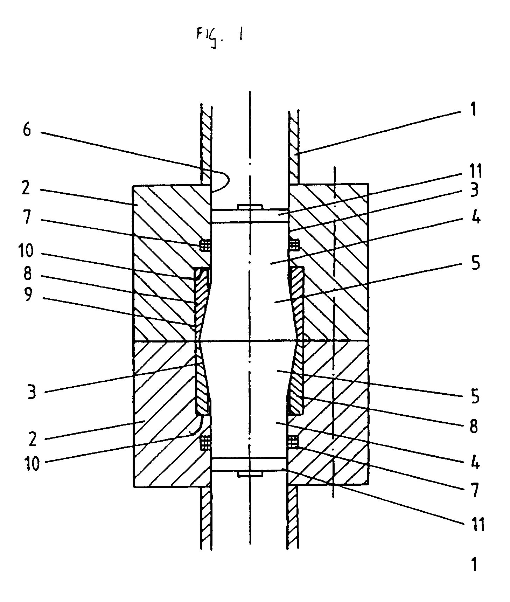

Die Zeichnung zeigt den mit einem Hohlleiterfenster versehenen Abschnitt eines Hohlleiters für ein Entfernungsmeßgerät. In diesem Bereich sind die beiden den Hohlleiter bildenden Hohlleiterrohre 1 mit je einem Flansch 2 versehen und durch in der Zeichnung nicht dargestellte Verbindungsorgane aneinander befestigt. Innerhalb des Hohlleiters sind zwei Hohlleiterfenster 3 angeordnet. Jedes Hohleiterfenster 3 besitzt einen zylinderförmigen Abschnitt 4 und einen konischen Abschnitt 5. Der zylinderförmige Abschnitt 4 ragt mit einem Spiel in eine Bohrung 6 des Flansches 2 hinein. Der konische Abschnitt 5 hingegen liegt in einer im Inneren entsprechend konisch ausgebildeten relativ dünnwandigen Buchse 8. Diese Buchse 8 ist mit einem Spiel in einer zylinderförmigen Bohrung 9 des betreffenden Flansches 2 gelagert. In axialer Richtung liegt die Buchse 8 gegen eine Stützschulter 10 des Hohlleiters bzw. Flansches 2 an. Bei der Montage werden im offenen Zustand die Buchsen 8 und die Hohlleiterfenster 3 jeweils in die zylinderförmigen Bohrungen 9 der Flansche 2 dieser Abschnitte eingesteckt. Dabei liegen diese dann spiegelbildlich zueinander. Anschließend werden die beiden Flansche 2 auf übliche Art und Weise miteinander verbunden.

Die voneinander abgekehrten zylinderförmigen Abschnitte sind mit einem Dichtungsring 7 gegenüber dem Hohlleiter abgedichtet, wobei der Dichtungsring 7 in einer entsprechenden Ringnut des Hohlleiters liegt. An den freien Enden der zylinderförmigen Abschnitte 4 sind /4-Transformatorenscheiben angeordnet.

Das in der Zeichnung dargestellte Ausführungsbeispiel kann den verschiedenen Betriebsverhältnissen angepaßt werden. Für Füllstandmeßgeräte ist zweckmäßig das Hohlleiterrohr 1 explosionsgeschützt ausgeführt.

## Patentansprüche

1. Entfernungsmeßgerät, insbesondere zur Füllstandmessung von Industrietanks, bestehend aus einem elektronischen Sende- und Empfangsteil für kurzwellige elektromagnetische Wellen, wie Mikrowellen, und einem durch eine Trennwand führenden zylinderförmigen Hohlleiter, in dem ein die beiden Räume trennendes Hohlleiterfenster aus einem für die elektromagnetischen Wellen durchlässigen Werkstoff, wie Quarzglas, angeordnet ist, wobei der Hohlleiter und das Hohlleiterfenster zur axialen Abstützung konisch ausgebildete Abschnitte aufweisen, dadurch gekennzeichnet, daß der konische Abschnitt (5) des Hohlleiterfensters (3) in einer entsprechend konisch ausgebildeten Buchse (8) liegt, die mit einem Spiel in einer zylinderförmigen Bohrung (9) des Hohlleiterfensters (3) lagert und in axialer Richtung gegen eine Stützschulter (10) des Hohlleiters anliegt.

2. Entfernungsmeßgerät nach Anspruch 1, dadurch gekennzeichnet, daß im Hohlleiter zwei Hohlleiterfenster (3) mit je einer Buchse (8) spiegelbildlich angeordnet sind, wobei der Hohlleiter in zwei lösbar miteinander verbundene Abschnitte derart unterteilt ist, daß im offenen Zustand die Buchsen (8) und die Hohlleiterfenster (3) in die zylinderförmigen Bohrungen (9) der Abschnitte einsteckbar sind.

3. Entfernungsmeßgerät nach Anspruch 1 oder 2, dadurch gekennzeichnet, daß zwischen dem zylinderförmigen Abschnitt (4) des Hohlleiterfensters (3) und dem Hohlleiter ein Dichtungsring (7) angeordnet ist, der in einer Ringnut des Hohlleiters liegt.

4. Entfernungsmeßgerät nach einem der Ansprüche 1 bis 3, dadurch gekennzeichnet, daß die Buchse (8) aus einem Metall besteht, das dem Temperaturausdehnungskoeffizienten des Hohlleiterfensters (3) entspricht oder nahekommt.

## Claims

1. A telemeter, more particularly for measuring the level of the contents of industrial tanks, consisting of an electronic transmission and reception stage for short-wave electromagnetic waves, such as microwaves, and a cylindrical waveguide extending through a partition and having a waveguide window consisting of a material transparent to electromagnetic waves, such as quartz glass, such window separating the two chambers, the waveguide and the waveguide window having conical portions for axial support, characterised in that the conical portion (5) of the waveguide window (3) lies in a correspondingly conical bush (8) mounted with clearance in a cylindrical bore (9) in the waveguide window (3) and axially abutting against a support shoulder (10) of the waveguide.

2. A telemeter according to claim 1, characterised in that the waveguide contains two waveguide windows (3) each with a bush (8), the windows being arranged in laterally reversed form, the waveguide being so divided into two releasably connected portions that in the open state the bushes (8) and the waveguide windows (3) can be inserted into the cylindrical bores (9) of the portions.

3. A telemeter according to claim 1 or 2, characterised in that a sealing ring (7) situated in an annular groove in the waveguide is disposed between the cylindrical portion (4) of the waveguide window (3) and the waveguide.

4. A telemeter according to any one of claims 1 to 3, characterised in that the bush (8) consists of a metal which corresponds to or is close to the coefficient of thermal expansion of the waveguide window (3).

## Revendications

1. Télémètre, notamment pour la mesure du niveau de remplissage de citernes industrielles, constitué d'une partie électronique d'émission et de réception d'ondes électro-magnétiques courtes, comme les micro-ondes, et d'un guide d'ondes de forme cylindrique guidant au travers d'une paroi de séparation, dans lequel est disposée une fenêtre du guide d'ondes séparant les deux chambres et constituée en un matériau laissant passer les ondes électromagnétiques, comme le verre quartzeux, le guide d'ondes et la fenêtre du guide d'ondes comportant des tronçons de forme conique destinés à l'appui axial, caractérisé en ce que le tronçon conique (5) de la fenêtre (3) du guide d'ondes se trouve dans une douille (8), qui a une forme conique correspondante, qui est logée avec jeu dans un perçage (9) cylindrique de la fenêtre (3) du guide d'ondes et qui est en appui dans la direction axiale sur un épaulement (10) d'appui.

2. Télémètre suivant la revendication 1, caractérisé en ce que deux fenêtres (3) du guide d'ondes comportant chacune une douille (8) sont disposées symétriquement, le guide d'ondes se subdivisant en deux tronçons reliés l'un à l'autre de façon démontable, de sorte que, à l'état ouvert, les douilles (8) et les fenêtres (3) du guide d'ondes puissent être enfilées dans les perçages (9) cylindriques des tronçons.

3. Télémètre suivant la revendication 1 ou 2, caractérisé en ce qu'une bague (7) d'étanchéité, qui se trouve dans une rainure annulaire du guide d'ondes, est disposée entre le tronçon (4) cylindrique de la fenêtre (3) du guide d'ondes et le guide d'ondes.

4. Télémètre suivant l'une des revendications 1 à 3, caractérisé en ce que les douilles (8) sont en un métal, dont le coefficient de dilatation thermique correspond ou est proche de celui de la fenêtre (3) du guide d'ondes.
